# EUROPEAN PATENT APPLICATION

(11) **EP 4 266 734 A1**
(43) Date of publication of application: **25.10.2023**
(21) Application number: 21922384.9
(22) Date of filing: 21.10.2021
(51) Int. Cl.: H04W 24/04

(54) **POWER-DOWN ALARM METHOD AND RELATED DEVICE**

(30) Priority: 26.01.2021 CN 202110104004
(71) Applicant: Huawei Technologies Co., Ltd., Shenzhen, Guangdong 518129 (CN)
(72) Inventor: LIAO, Qian, Shenzhen, Guangdong 518129 (CN)
(74) Representative: Maiwald GmbH
(86) International application number: PCT/CN2021/125120
(87) International publication number: WO 2022/160793

(57) **Abstract**

Embodiments of this application are used in the field of communication technologies, and disclose a power-off alarm method and a related device, including: After being powered on, a terminal configures a dying gasp packet, where the dying gasp packet is used to indicate that the terminal is in a power-off state; and the terminal device sends the dying gasp packet to a wireless access point after detecting a power-off signal. In embodiments of this application, when detecting the power-off signal, the terminal reports the power-off state of the terminal to the wireless access point by using the dying gasp packet, so that an access point device can learn of a power-off fault of the terminal device in time, and indicate a gateway to maintain the terminal device. In this way, maintenance costs of the terminal device can be greatly reduced, and maintenance efficiency can be improved.

## Description

This application claims priority to Chinese Patent Application No. 202110104004.4, filed with the China National Intellectual Property Administration on January 26, 2021, and entitled "POWER-OFF ALARM METHOD AND RELATED DEVICE", which is incorporated herein by reference in its entirety.

### TECHNICAL FIELD

Embodiments of this application relate to the field of communication technologies, and in particular, to a power-off alarm method and a related device.

### BACKGROUND

As wireless communication technologies rapidly develop, Wi-Fi, as a short-range wireless technology, is widely applied to various communication scenarios. In a Wi-Fi system, terminal devices share an air interface resource provided by a Wi-Fi access network. When simultaneously performing communication, a plurality of Wi-Fi terminal devices need to contend for an air interface resource to establish a connection to a Wi-Fi access point device.

When an air interface is busy, the communication is interrupted because the Wi-Fi terminal device may not obtain the air interface resource through contention. When the Wi-Fi terminal device is powered off or a battery is depleted, the connection between the Wi-Fi terminal device and the Wi-Fi access point device is also broken. However, a core network connected to the Wi-Fi access point device cannot be aware of a reason for communication interruption of the Wi-Fi terminal device, and therefore, cannot specifically analyze a fault of the Wi-Fi terminal device. In some scenarios, the core network needs to learn power-off of the Wi-Fi terminal device. For example, Wi-Fi cameras deployed in a mountainous area or a reservoir are powered by batteries or solar energy. If the core network can be aware of a fault occurring in the camera due to power-off, battery depletion, or the like, maintenance costs can be greatly reduced. Therefore, how to learn a power-off fault of the Wi-Fi terminal device becomes a problem urgently needing to be

### SUMMARY

Embodiments of this application provide a power-off alarm method and a related device, to report power-off alarm information of a terminal device, so that power-off of the terminal device can be learned based on the power-off alarm information, thereby reducing maintenance costs of the terminal device.

A first aspect of embodiments of this application provides a power-off alarm method, including:
A Wi-Fi terminal device and an access point device perform data transmission through a wireless network. When being in a power-off state because of battery depletion, power interruption, or the like, the terminal device may send the state to the access point device. In this way, the access point device may send the power-off state of the terminal device to a network management device, to facilitate subsequent maintenance of the terminal device. Therefore, after being powered on, the terminal device pre-configures a dying gasp packet, and the dying gasp packet is used to indicate that the terminal device is in the power-off state. After detecting a power-off signal, the terminal device sends the dying gasp packet to a wireless access point.

In the foregoing embodiment, after receiving the power-off signal, the terminal device sends the dying gasp packet to the access point device, to provide a feedback that the terminal device is in the power-off state. In this way, the access point device may send the situation to the network management device, so that the network management device learns a reason for a fault of the terminal device, and then maintains the terminal device, thereby greatly reducing maintenance costs of the terminal device. In addition, when being powered on, the terminal device pre-configures the dying gasp packet, and immediately sends the dying gasp packet after detecting the power-off signal. In this way, before the terminal device is powered off, a time for assembling the dying gasp packet is reduced, and a packet sending success rate is increased, thereby improving a capability of the access point device to learn the power-off state of the terminal device.

Based on the first aspect, this application further provides a first implementation of the first aspect:
The terminal device may feed back the power-off state of the terminal to the wireless access point in two forms: a management frame and a data frame. That is, the terminal device may assemble a dying gasp packet in the form of the management frame and a dying gasp packet in the form of the data frame, and then send both the dying gasp packets to the wireless access point by using a management frame queue and a data frame queue.

It can be understood that the management frame has a high transmit power and the data frame has a high transmission rate. Feeding back the power-off state of the terminal device in the forms of the two frames can further increase a sending success rate of the dying gasp packet.

Based on the first implementation of the first aspect, this application further provides a second implementation of the first aspect:
The dying gasp packet may be in forms of a management frame packet and a data frame packet, and the terminal device may reflect the power-off state of the terminal device by using a reserved field in the management frame packet. When assembling the dying gasp packet in the form of the management frame, the terminal device first determines a value of the preset reserved field, and determines the management frame packet as the dying gasp packet. After detecting the power-off signal, the terminal device first clears the management frame queue of the terminal device, adds the dying gasp packet to a cleared management frame queue, and sends the dying gasp packet to the wireless access point by using the management frame queue.

When using the dying gasp packet in the form of the management frame, the terminal device needs to send the packet by using the management frame queue. When the terminal device is to be in the power-off state, the terminal device first needs to reflect the power-off state to the wireless access point. Therefore, clearing the management frame queue can reduce a time for waiting to send the dying gasp packet, thereby further increasing a sending success rate of the dying gasp packet.

Based on the first implementation and the second implementation of the first aspect, this application further provides a third implementation of the first aspect:
The terminal device may further reflect the power-off state of the terminal device in the form of the data frame packet. When assembling the dying gasp packet in the form of the data frame packet, the terminal device adds the data frame packet to the data frame queue, and sends the dying gasp packet to the wireless access point by using the data frame queue to which the data frame packet is added.

Generally, the data frame packet has a high transmission rate, so that a time for which the wireless access point receives the dying gasp packet of the terminal device can be reduced, and the wireless access point can more quickly learn power-off of the terminal device.

Based on the third implementation of the first aspect, this application further provides a fourth implementation of the first aspect:
When reflecting the power-off state by using the data frame, the terminal device not only needs to assemble the data frame packet, but also needs to determine the data frame queue for sending the data frame packet. Therefore, before detecting the power-off signal, the terminal device needs to determine a target data frame queue in advance. Specifically, the target data frame queue may be determined based on priority levels corresponding to a plurality of data frame queues. For example, a data frame queue with a highest sending level may be determined as the target data frame queue. After detecting the power-off signal, the terminal device adds a pre-configured data frame packet to the target data frame queue, and sends the dying gasp packet to the wireless access point by using the target data frame queue to which the data frame packet is added.

The target data frame queue is determined based on the priority levels, and the terminal device may select a data frame queue with a high sending level to send the dying gasp packet. In this way, a time for waiting to send the dying gasp packet can be reduced, thereby further increasing a sending success rate of the dying gasp packet.

Based on the first aspect, this application further provides a fifth implementation of the first aspect:
It can be understood that, the terminal device may specify a dedicated queue for the dying gasp packet, and the dedicated queue may be used only to send the dying gasp packet. The terminal device sends the dying gasp packet to the wireless access point by using the dedicated queue without waiting, thereby further increasing a sending success rate of the dying gasp packet.

Based on the first aspect to the fifth implementation of the first aspect, this application further provides a sixth implementation of the first aspect:
The power-off signal is a power-off alarm signal of the terminal device, that is, alarm information sent when electric energy of the terminal device is to be depleted. Therefore, the terminal device may control generation of the power-off signal by detecting an input voltage of the terminal device. When the input voltage corresponding to the terminal device is less than a preset threshold, the terminal device generates the power-off signal.

Based on the first aspect to the sixth implementation of the first aspect, this application further provides a seventh implementation of the first aspect:
A transmission channel exists between the terminal device and the wireless access point device, and communication is implemented through the transmission channel. Therefore, when being in the power-off state and sending the dying gasp packet to the wireless access point, the terminal device may first increase a clear channel assessment threshold corresponding to a transmission channel, and send the dying gasp packet through the transmission channel.

A clear channel assessment value is used to reflect busyness of a transmission channel. The terminal device determines, based on the clear channel assessment threshold, whether to perform communication through the channel. When determining that a current clear channel assessment value of a channel is greater than the clear channel assessment threshold, the terminal device performs communication without using the channel. Therefore, when the terminal device increases the clear channel assessment threshold, a quantity of transmission channels through which communication can be performed may be increased, thereby increasing a sending success rate of the dying gasp packet.

A second aspect of embodiments of this application provides a power-off alarm method, including:
A wireless access point receives a dying gasp packet sent by a terminal. After receiving the dying gasp packet, the wireless access point may determine that the terminal is in a power-off state.

When receiving the dying gasp packet sent by the terminal device, the wireless access point may learn that the terminal device is in the power-off state. In this way, an access point device may send the situation to a network management device, so that the network management device learns a reason for a fault of the terminal device, and maintains the terminal device, thereby greatly reducing maintenance costs of the terminal device.

A third aspect of embodiments of this application provides a terminal device, including:
a processing unit, configured to pre-configure a dying gasp packet after the terminal device is powered on, where the dying gasp packet is used to indicate that the terminal device is in a power-off state;
a detection unit, configured to detect a power-off signal; and
a sending unit, configured to send the dying gasp packet to a wireless access point after the power-off signal is detected.

Based on the third aspect, this application further provides a first implementation of the third aspect:
The sending unit is specifically configured to send both dying gasp packets to the wireless access point by using a management frame queue and a data frame queue.

Based on the first implementation of the third aspect, this application further provides a second implementation of the third aspect:
The dying gasp packet includes a management frame packet.

The processing unit is specifically configured to determine a value of a preset field in the management frame packet, and determine the management frame packet as the dying gasp packet.

The processing unit is further configured to: after the detection unit detects the power-off signal, clear a to-be-sent management frame packet in the management frame queue, and add the management frame packet to the cleared management frame queue.

The sending unit is specifically configured to send the dying gasp packet to the wireless access point by using the management frame queue to which the management frame packet is added.

Based on the first implementation and the second implementation of the third aspect, this application further provides a third implementation of the third aspect:
The dying gasp packet includes a data frame packet.

The sending unit is specifically configured to add the data frame packet to the data frame queue, and send the dying gasp packet to the wireless access point by using the data frame queue to which the data frame packet is added.

Based on the third implementation of the third aspect, this application further provides a fourth implementation of the third aspect:
The terminal device further includes a determining unit.

The determining unit is configured to: before the detection unit detects the power-off signal, determine priority levels corresponding to a plurality of data frame queues; and determine a target data frame queue based on the priority levels.

The sending unit is specifically configured to add the data frame packet to the target data frame queue, and send the dying gasp packet to the wireless access point by using the target data frame queue to which the data frame packet is added.

Based on the third aspect, this application further provides a fifth implementation of the third aspect:
The terminal device pre-configures a dedicated queue.

The sending unit is specifically configured to send the dying gasp packet to the wireless access point by using the dedicated queue.

Based on the third aspect to the fifth implementation of the third aspect, this application further provides a sixth implementation of the third aspect:
The power-off signal is generated when an input voltage corresponding to the terminal device is less than a preset threshold.

Based on the third aspect to the sixth implementation of the third aspect, this application further provides a seventh implementation of the third aspect:
A transmission channel exists between the terminal and the wireless access point.

The sending unit is further configured to: increase a clear channel assessment threshold corresponding to the transmission channel, and send the dying gasp packet through the transmission channel.

A fourth aspect of embodiments of this application provides an access point device, including:
a receiving unit, configured to receive a dying gasp packet sent by a terminal device; and
a determining unit, configured to determine a power-off state of the terminal device based on the dying gasp packet.

A fifth aspect of this application provides a terminal device, including at least one processor and a memory. Computer-executable instructions that can be run on the processor are stored in the memory. When the computer-executable instructions are executed by the processor, the terminal device performs the method in any one of the first aspect or the possible implementations of the first aspect.

A sixth aspect of this application provides an access point device, including at least one processor and a memory. Computer-executable instructions that can be run on the processor are stored in the memory. When the computer-executable instructions are executed by the processor, the access point device performs the method in the possible implementation of the second aspect.

A seventh aspect of this application provides a power-off alarm system, including a terminal device and an access point device. The terminal device performs the method in any one of the first aspect or the possible implementations of the first aspect. The access point device performs the method in the possible implementation of the second aspect.

An eighth aspect of embodiments of this application provides a computer storage medium, including a program. When the program is run on a computer, the computer is enabled to perform the method in any one of the first aspect or the possible implementations of the first aspect.

A ninth aspect of this application provides a chip or a chip system. The chip or the chip system includes at least one processor and a communication interface. The communication interface and the at least one processor are interconnected through a line. The at least one processor is configured to run a computer program or instructions, to perform the power-off alarm method described in any one of the first aspect or the possible implementations of the first aspect.

The communication interface in the chip may be an input/output interface, a pin, a circuit, or the like.

In a possible implementation, the chip or the chip system described above in this application further includes at least one memory, and instructions are stored in the at least one memory. The memory may be a storage unit inside the chip, such as a register or a cache, or may be a storage unit of the chip (such as a read-only memory or a random access memory).

The seventh aspect of this application provides a computer program product. The computer program product includes computer software instructions, and the computer software instructions can be loaded by using a processor to implement the procedure in the power-off alarm method in any one of the first aspect or the possible implementations of the first aspect.

It can be learned from the foregoing technical solutions that embodiments of this application have the following advantages:
In embodiments of this application, after being powered on, the terminal device pre-configures the dying gasp packet, and after detecting the power-off signal, the terminal device sends the dying gasp packet to the access point device, to provide a feedback that the terminal device is in the power-off state. The access point device may learn a power-off fault of the terminal device by using a dying gasp packet mechanism, to facilitate subsequent maintenance of the terminal device, thereby greatly reducing maintenance costs of the terminal device. In addition, when being powered on, the terminal device pre-configures the dying gasp packet, and immediately sends the dying gasp packet after detecting the power-off signal. Therefore, before the terminal device is completely powered off, a time for assembling the dying gasp packet may be reduced, and a packet sending success rate may be increased, thereby improving a capability of the wireless access point to learn the power-off state of the terminal device.

### BRIEF DESCRIPTION OF DRAWINGS

FIG. 1 is a schematic flowchart of a power-off alarm method according to an embodiment of this application;
FIG. 2 is a schematic diagram of a structure of a terminal device according to an embodiment of this application;
FIG. 3 is a schematic diagram of a structure of an access point device according to an embodiment of this application;
FIG. 4 is a schematic diagram of a structure of another terminal device according to an embodiment of this application; and
FIG. 5 is a schematic diagram of a structure of another access point device according to an embodiment of this application.

### DESCRIPTION OF EMBODIMENTS

Embodiments of this application provide a power-off alarm method and a related device, to report power-off alarm information of a terminal device, so that power-off of the terminal device can be learned based on the power-off alarm information, thereby reducing maintenance costs of the terminal device.

The following clearly describes the technical solutions in this application with reference to the accompanying drawings in this application. It is clear that the described embodiments are merely some but not all of embodiments of this application.

In this specification, the claims, and the accompanying drawings of this application, terms "first", "second", "third", "fourth", and the like (if existent) are intended to distinguish between similar objects but do not necessarily indicate a specific order or sequence. It should be understood that data used in such a way are interchangeable in appropriate circumstances, so that embodiments described herein can be implemented in an order other than the content illustrated or described herein. In addition, terms such as "include", "have", and any variations thereof are intended to cover non-exclusive inclusions, for example, a process, method, system, product, or device that includes a series of steps or units is not necessarily limited to those clearly listed steps or units, but may include other steps or units that are not clearly listed or inherent to such a process, method, product, or device.

As a short-range wireless network transmission technology, Wi-Fi may convert a wired network signal into a radio signal for transferring. A Wi-Fi system may include an access point device and a terminal device. One end of the access point device is connected to a wired network, and the other end is connected to the terminal device through a radio channel. The access point device is configured to perform conversion between a wired signal and a radio signal. The access point device may convert a wired signal in the wired network into a radio signal and then transfer the radio signal to the terminal device, and may further receive a radio signal of the terminal device, convert the radio signal into a wired signal, and transfer the wired signal to the wired network.

In the Wi-Fi system, all terminal devices share an air interface resource. When the access point device communicates with the terminal devices, the terminal devices need to contend for the air interface resource. Therefore, a reason why the terminal device is disconnected may be a communication failure caused when no air interface resource is obtained through contention, or may be a failure to communicate with the access point device caused by a fault of the terminal device, such as power-off of the terminal device or battery depletion. Currently, the Wi-Fi system is applicable to a personal home device in most cases, and the access point device does not need to be aware of the reason why the terminal device is disconnected. However, in some new application scenarios of the Wi-Fi system, the access point device needs to learn the reason why the terminal device is disconnected. For example, Wi-Fi cameras deployed in a mountainous area or a reservoir are powered by batteries or solar energy, and communication with the access point device is easily interrupted due to a fault, such as power-off or battery depletion. Plenty of manpower and material resources need to be consumed if professionals are arranged to perform monitoring and maintenance on site. If the terminal device may report a power-off state of the terminal device by itself, maintenance costs can be greatly reduced. In addition, how the terminal device successfully reports the power-off state with interference or in a remote environment also becomes a problem urgently needing to be resolved.

Based on the foregoing problem, embodiments of this application provide a power-off alarm method and a related device, to report a power-off state of a terminal device by using a dying gasp mechanism, so that an access point device can learn a power-off fault of the terminal device in a timely manner, subsequently report the power-off to a gateway, and perform maintenance for the power-off fault, thereby reducing maintenance costs.

The dying gasp mechanism is a method for performing monitoring and alarming on a power supply of a device. A principle of the dying gasp mechanism is as follows: The terminal monitors a status of the power supply, and when finding that the device is powered off or a battery is depleted, sends a final status information of the terminal device by using energy stored by an energy storage component of the terminal device, such as a large capacitor or a backup battery. Therefore, the terminal device may report the power-off state of the terminal device to the access point device by using the dying gasp mechanism, so that the access point device learns a reason why the terminal device is disconnected.

A Wi-Fi terminal device and the access point device perform data transmission through a wireless network. When being in the power-off state because of battery depletion, power interruption, or the like, the terminal device may send a dying gasp packet to the access point device. In this way, the access point device may send the power-off state of the terminal device to a network management device based on the dying gasp packet, to facilitate subsequent maintenance of the terminal device. Therefore, after being powered off, the terminal device may first pre-configure the dying gasp packet. After detecting a power-off signal, the terminal device sends the dying gasp packet to a wireless access point.

In the foregoing embodiment, after receiving the power-off signal, the terminal device sends the dying gasp packet to the access point device, to provide a feedback that the terminal device is in the power-off state. In this way, the access point device may send the situation to the network management device, so that the network management device learns a reason for a fault of the terminal device, and maintains the terminal device, thereby greatly reducing maintenance costs of the terminal device.

Specifically, sending the dying gasp packet needs to go through a series of steps, such as packet construction, in-core communication, queue caching, aggregation waiting, and air interface scheduling. Therefore, if the terminal device assembles and sends the packet after monitoring the power-off signal, it is very likely that an amount of electricity of the energy storage component is depleted before the packet is assembled. In addition, if the dying gasp packet is sent in forms of a normal management packet or data packet, when contention for an air interface is fierce or a distance between the terminal device and the access point device is long, it is likely that the packet is lost and cannot be successfully transmitted to the access point device, thereby eventually causing a failure to report the power-off state of the terminal device.

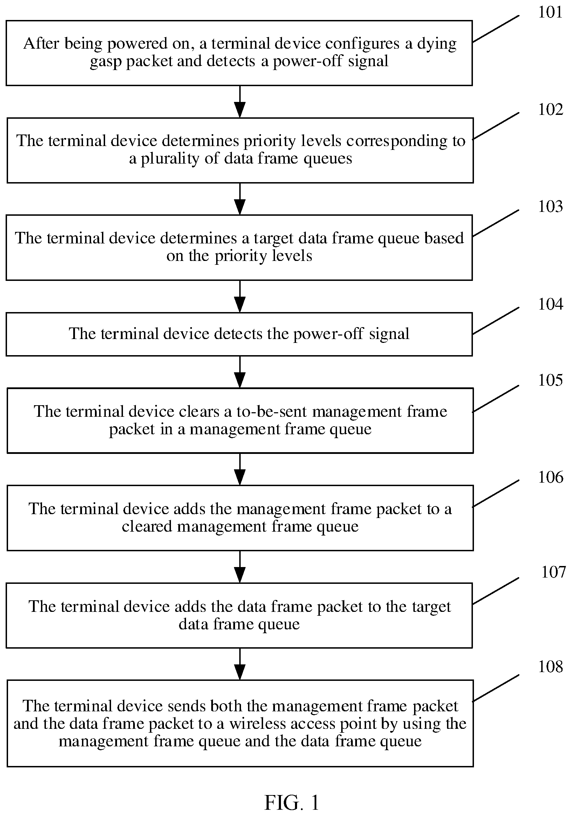

To increase a sending success rate of the dying gasp packet, FIG. 1 is a schematic flowchart of a power-off alarm method according to an embodiment of this application. As shown in FIG. 1, the power-off alarm method includes the following steps.

101: After being powered on, the terminal device configures a dying gasp packet and detects a power-off signal.

To ensure that the dying gasp packet is to be successfully sent, the dying gasp packet needs to be pre-assembled in advance before the power-off signal is detected, so that the dying gasp packet can be immediately sent after the power-off signal appears, thereby avoiding a case in which an amount of electricity of an energy storage component is depleted before the packet is assembled and after the terminal is powered off.

Specifically, the terminal device may start to pre-assemble the dying gasp packet after being powered on, and the dying gasp packet is used to indicate that the terminal device is in a power-off state. The assembled dying gasp packet is stored. The terminal device starts to monitor a status of a battery, and immediately sends the dying gasp packet after detecting the power-off signal. In this way, before the terminal device is powered off, a time for assembling the dying gasp packet is reduced and a packet sending success rate is increased.

To further increase a sending success rate of the dying gasp packet, two forms of frames may be further used to carry power-off state information of the terminal device. That is, the dying gasp packet includes a management frame packet and a data frame packet. The management frame packet is sent by using a management frame queue, and the data frame packet is sent by using a data frame queue. The management frame packet and the data frame packet are separately described below.

### (1) Management frame packet

A management frame has a high transmit power, so that a power loss in a wireless network can be overcome. When a distance between the terminal device and an access network device is long, a sending success rate of a management frame is high. There are various types of management frames for interactions between Wi-Fi devices. An access point device may send a management frame request to the terminal device. The terminal device responds to the request and sends a management frame reply to the access point device, to complete communication between the access point device and the terminal device.

For example, when the terminal device is disconnected from the access point device, the terminal device may send a deauthentication (deauth) management frame to the access point device. Therefore, when the terminal device is in the power-off state, the power-off state of the terminal device may be carried by using the deauth management frame, to constitute a dying gasp packet. Specifically, the power-off state of the terminal device may be indicated by using a reserved field in the deauth management frame.

For example, an identifier field may be extended in the reserved field of the deauth management frame, to indicate the power-off state of the terminal. For example, a reserved field is determined as an identifier bit of the power-off state, and when the reserved field is 1, it indicates that the terminal is in the power-off state; and when the reserved field is 0, it indicates that the terminal is not in the power-off state. After being powered on, the terminal may pre-assemble the deauth management frame, determine, as 1, a value of the reserved field reflecting the power-off state, encapsulate the deauth management frame, and determine the deauth management frame as a dying gasp packet. When being in the power-off state, the terminal sends the dying gasp packet. The access point device detects the received dying gasp packet, and learns a status of the terminal device based on the value of the reserved field reflecting the power-off state.

### (2) Data frame packet

A data frame has a high transmission rate, so that fast transmission in a wireless network can be implemented, interference from another signal in the wireless network is reduced, and a sending success rate of the dying gasp packet is increased. For example, the terminal device may fill in the data frame in a form of a preamble plus a TLV format, and a wireless access point device performs parsing in the form of the preamble plus the TLV format, to determine content of the data frame. Specifically, a form of the data frame packet indicating that the terminal device is in the power-off state is not limited.

It can be understood that, when assembling the dying gasp packet in the two forms of the frames, the terminal device may more effectively report the power-off state of the terminal device, thereby increasing a probability that the access point device learns the power-off state of the terminal. The management frame packet may be sent by using a management frame queue, and the data frame is sent by using a data frame queue. The terminal device may further pre-configure a dedicated queue for the dying gasp packet. That is, the dedicated queue is used only to send the dying gasp packet instead of another packet. In this way, the dying gasp packet can be sent quickly and effectively, thereby reducing a time for waiting to send the packet and increasing a packet sending success rate.

102: The terminal device determines priority levels corresponding to a plurality of data frame queues.

It can be understood that the terminal device has various types of data frame queues, and the data frames have different priority levels. A data frame in the data frame queue with a high priority is preferentially sent. For example, the terminal device includes a VI queue and a VO queue. The VI queue is used to transmit video data, and the VO queue is used to transmit voice data. A priority of the VI queue is higher than that of the VO queue. Therefore, compared with a data frame in the VO queue, a data frame in the VI queue is preferentially sent.

103: The terminal device determines a target data frame queue based on the priority levels.

It can be understood that, to ensure that the dying gasp packet is to be quickly sent after power-off, to avoid a case in which the packet is not sent because an amount of electricity of an energy storage component is depleted, the terminal device needs to select a data frame queue with a high priority for sending. For example, a data frame queue with a highest priority may be selected as the target data frame queue. When being in the power-off state, the terminal device sends the data frame packet by using the target data frame queue, to increase a sending success rate of the dying gasp packet.

It can be understood that the terminal device may immediately select the target data frame queue after being powered on. That is, step 101 may be performed simultaneously with steps 102 and 103, and there is no time sequence relationship.

104: The terminal device detects the power-off signal.

The power-off signal may be a power-off alarm signal of the terminal device, that is, an alarm signal sent when the terminal device is powered off or a battery is depleted. Specifically, a detection unit of the terminal device may monitor an input voltage of the terminal device. When it is detected that the input voltage is less than a value, it indicates that the terminal device is to be in the power-off state. In this case, the power-off signal is sent to indicate the terminal device to send the dying gasp packet to the access point device, to report a power-off fault of the terminal device.

105: The terminal device clears a to-be-sent management frame packet in the management frame queue.

Specifically, when the management frame packet is to be sent by using the management frame queue, the terminal device needs to clear another management frame packet in the management frame queue. The terminal device sequentially sends packets in an order of management frame packets in the queue, and to ensure that the terminal device sends the dying gasp packet before the terminal device is completely powered off, a time for waiting to send the dying gasp packet should be reduced. Therefore, a first to-be-sent packet in the queue may be cleared, so that the dying gasp packet can be directly sent without waiting, thereby further increasing a sending success rate of the dying gasp packet.

106: The terminal device adds the management frame packet to a cleared management frame queue.

After clearing the management frame queue, the terminal device adds the management frame packet to the cleared management frame queue, and sends the management frame packet through a send window: the management frame queue.

107: The terminal device adds the data frame packet to the target data frame queue.

The terminal device sends the data frame packet by using the target data frame queue, and may preferentially send the data frame packet, so that the dying gasp packet is quickly sent and a sending success rate of the dying gasp packet is increased.

It can be understood that, the terminal device can simultaneously perform step 106 and step 107. That is, the steps of adding the management frame packet to the management frame queue and the data frame packet to the data frame queue by the terminal device are independent of each other, and there is no time sequence. The terminal may preferentially add the management frame packet to the management frame queue, or may preferentially add the data frame packet to the data frame queue, or may simultaneously perform the two steps. This is not specifically limited.

For example, a processing chip of the terminal device may further separately provide a hardware queue for sending a specific service packet. A sending priority of the hardware queue may be higher than that of another queue. The terminal device may specify the special service packet for the queue, and pre-configure the queue for specially sending the dying gasp packet. Specifically, the chip provides a dedicated pre-configured interface to bypass another protocol stack and cache queue. In this way, steps such as inter-core communication, queue caching, and aggregation waiting required for sending a normal packet are omitted, thereby increasing packet sending efficiency of the dying gasp packet.

108: The terminal device sends both the management frame packet and the data frame packet to the wireless access point by using the management frame queue and the data frame queue.

The terminal device may send both dying gasp packets in the two forms by using the management frame queue and the data frame queue, to increase a probability that the access point device receives the dying gasp packet. For example, it may be configured that the management frame queue and the data frame queue are cyclically sent. That is, the terminal device pays no attention to a receiving status of the access point device, but keeps sending. Performing sending a plurality of times may increase a packet receiving success rate of the access point device, so that the access point device learns the power-off state of the terminal, thereby increasing a reporting success rate of the dying gasp packet.

It can be understood that, the management frame queue and the data frame queue are cache queues of the terminal device, and are "send windows" of the packets, and a wireless communication channel further exists between the terminal device and the access point device. Generally, when the terminal device communicates with the access point device, clear channel assessment values of a plurality of transmission channels need to be detected, to obtain busyness of each communication channel. However, when a clear channel assessment value of a communication channel is greater than a clear channel assessment threshold, it indicates that air interface contention interference corresponding to the communication channel is quite strong, and the terminal device does not select the communication channel for communication. However, in this embodiment, to increase a sending success rate of the dying gasp packet, the dying gasp packet still needs to be transmitted through the transmission channel even if the transmission channel is busy. Therefore, the terminal device needs to increase the clear channel assessment threshold of the transmission channel. In this way, a quantity of communication channels that can be selected by the terminal is increased, and the dying gasp packet may be sent through the plurality of transmission channels, thereby increasing a packet sending success rate.

In this embodiment, the terminal device sends both the dying gasp packets by using the management frame queue and the data frame queue, and performs other transmissions together, to increase a sending success rate of the dying gasp packet as much as possible, so that the access point device learns the power-off state of the terminal device, thereby providing a prerequisite for subsequent maintenance of the terminal device and reducing maintenance costs of the terminal device.

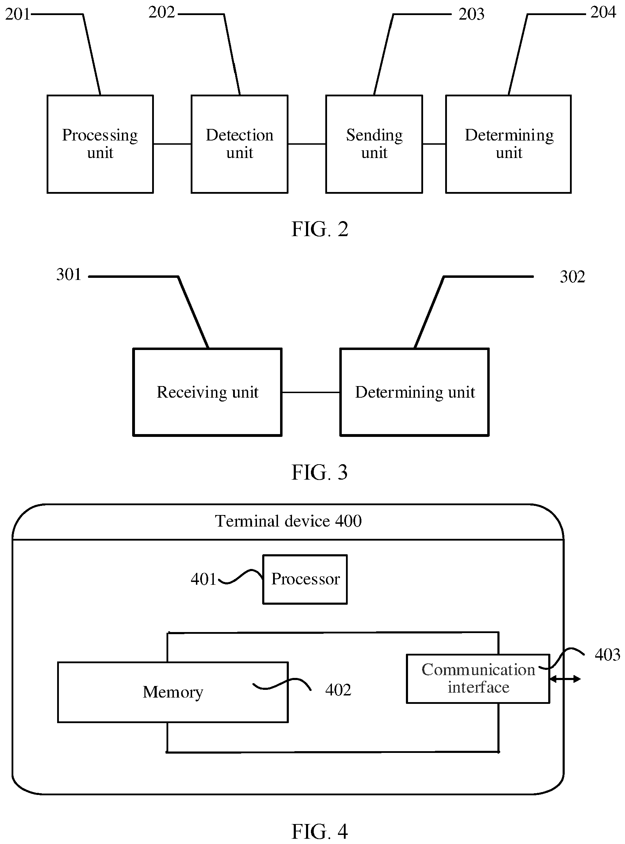

FIG. 2 is a schematic diagram of a structure of a terminal device according to an embodiment of this application. As shown in FIG. 2, the terminal device includes:
a processing unit 201, configured to pre-configure a dying gasp packet after the terminal device is powered on, where the dying gasp packet is used to indicate that the terminal device is in a power-off state;
a detection unit 202, configured to detect a power-off signal; and
a sending unit 203, configured to send the dying gasp packet to a wireless access point after the power-off signal is detected.

In an optional implementation, the sending unit 203 is specifically configured to send both dying gasp packets to the wireless access point by using a management frame queue and a data frame queue.

In an optional implementation, the dying gasp packet includes a management frame packet.

The processing unit 201 is specifically configured to: determine a value of a preset field in the management frame packet, and determine the management frame packet as the dying gasp packet.

The processing unit 201 is further configured to: after the detection unit 202 detects the power-off signal, clear a to-be-sent management frame packet in the management frame queue, and add the management frame packet to a cleared management frame queue.

The sending unit 203 is specifically configured to send the dying gasp packet to the wireless access point by using the management frame queue to which the management frame packet is added.

In an optional implementation, the dying gasp packet includes a data frame packet.

The sending unit 203 is specifically configured to: add the data frame packet to the data frame queue, and send the dying gasp packet to the wireless access point by using the data frame queue to which the data frame packet is added.

In an optional implementation, the terminal device further includes a determining unit 204.

The determining unit 204 is configured to: before the detection unit 202 detects the power-off signal, determine priority levels corresponding to a plurality of data frame queues; and determine a target data frame queue based on the priority levels.

The sending unit 203 is specifically configured to: add the data frame packet to the target data frame queue, and send the dying gasp packet to the wireless access point by using the target data frame queue to which the data frame packet is added.

In an optional implementation, the terminal device pre-configures a dedicated queue.

The sending unit 203 is specifically configured to send the dying gasp packet to the wireless access point by using the dedicated queue.

In an optional implementation, the power-off signal is generated when an input voltage corresponding to the terminal device is less than a preset threshold.

In an optional implementation, a transmission channel exists between the terminal device and the wireless access point.

The sending unit 203 is further configured to: increase a clear channel assessment threshold corresponding to the transmission channel, and send the dying gasp packet through the transmission channel.

FIG. 3 is a schematic diagram of a structure of an access point device according to an embodiment of this application. As shown in FIG. 3, the access point device includes:
a receiving unit 301, configured to receive a dying gasp packet sent by a terminal device; and
a determining unit 302, configured to determine a power-off state of the terminal device based on the dying gasp packet.

FIG. 4 is a schematic diagram of a structure of a terminal device 400 according to an embodiment of this application. The terminal device 400 includes: a processor 401, a memory 402, and a communication interface 403.

The processor 401, the memory 402, and the communication interface 403 are interconnected by using a bus. The bus may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one bold line is used for representation in FIG. 4, but this does not mean that there is only one bus or only one type of bus.

The memory 402 may include a volatile memory (volatile memory), for example, a random access memory (random access memory, RAM). Alternatively, the memory may include a non-volatile memory (non-volatile memory), such as a flash memory (flash memory), a hard disk drive (hard disk drive, HDD), or a solid-state drive (solid-state drive, SSD). Alternatively, the memory 402 may include a combination of the foregoing types of memories.

The processor 401 may be a central processing unit (central processing unit, CPU), a network processor (English: network processor, NP), or a combination of a CPU and an NP. The processor 401 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The communication interface 403 may be a wired communication interface, a wireless communication interface, or a combination thereof. The wired communication interface may be, for example, an Ethernet interface. The Ethernet interface may be an optical interface, an electrical interface, or a combination thereof. The wireless communication interface may be a WLAN interface, a cellular network communication interface, or a combination thereof.

The processor 401 is configured to run a computer program or instructions in the memory 402, to perform the steps performed by the terminal device in any one of the possible implementations of the embodiment shown in FIG. 1.

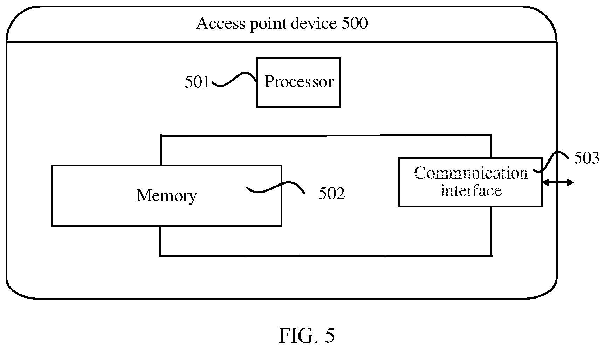

FIG. 5 is a schematic diagram of a structure of an access point device 500 according to an embodiment of this application. The access point device 500 includes: a processor 501, a memory 502, and a communication interface 503.

The processor 501, the memory 502, and the communication interface 503 are interconnected by using a bus. The bus may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one bold line is used for representation in FIG. 5, but this does not mean that there is only one bus or only one type of bus.

The memory 502 may include a volatile memory (volatile memory), for example, a random access memory (random access memory, RAM). Alternatively, the memory may include a non-volatile memory (non-volatile memory), such as a flash memory (flash memory), a hard disk drive (hard disk drive, HDD), or a solid-state drive (solid-state drive, SSD). Alternatively, the memory 502 may include a combination of the foregoing types of memories.

The processor 501 may be a central processing unit (central processing unit, CPU), a network processor (English: network processor, NP), or a combination of a CPU and an NP. The processor 501 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The communication interface 503 may be a wired communication interface, a wireless communication interface, or a combination thereof. The wired communication interface may be, for example, an Ethernet interface. The Ethernet interface may be an optical interface, an electrical interface, or a combination thereof. The wireless communication interface may be a WLAN interface, a cellular network communication interface, or a combination thereof.

The processor 501 is configured to run a computer program or instructions in the memory 502, to perform the steps performed by the access point device in any one of the possible implementations of the embodiment shown in FIG. 1.

An embodiment of this application further provides a power-off alarm system. The power-off alarm system includes a terminal device and an access point device. The terminal device is the terminal device described in the embodiment shown in FIG. 2, and the access point device is the access point device described in the embodiment shown in FIG. 3.

An embodiment of this application further provides a chip or a chip system. The chip or the chip system includes at least one processor and a communication interface. The communication interface and the at least one processor are interconnected through a line. The at least one processor is configured to run a computer program or instructions, to perform the power-off alarm method described in any one of the possible implementations of the embodiment shown in FIG. 1.

The communication interface in the chip may be an input/output interface, a pin, a circuit, or the like.

In a possible implementation, the chip or the chip system described above in this application further includes at least one memory, and instructions are stored in the at least one memory. The memory may be a storage unit inside the chip, such as a register or a cache, or may be a storage unit of the chip (such as a read-only memory or a random access memory).

An embodiment of this application further provides a computer storage medium. The computer storage medium is configured to store computer software instructions used by the terminal device, and includes a program designed for the terminal device.

An embodiment of this application further provides a computer storage medium. The computer storage medium is configured to store computer software instructions used by the access point device, and includes a program designed for the access point device.

An embodiment of this application further provides a computer program product. The computer program product includes computer software instructions, and the computer software instructions can be loaded by using a processor to implement the procedure in the power-off alarm method.

All or some of the foregoing embodiments may be implemented by using software, hardware, firmware, or any combination thereof. When software is used to implement the embodiments, all or some of the embodiments may be implemented in a form of a computer program product.

It may be clearly understood by persons skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (ROM, read-only memory), a random access memory (RAM, random access memory), a magnetic disk, or an optical disc.

## Claims

1. A power-off alarm method, comprising:
configuring, by a terminal after being powered on, a dying gasp packet, wherein the dying gasp packet is used to indicate that the terminal is in a power-off state; and
sending, by the terminal, the dying gasp packet to a wireless access point after detecting a power-off signal.

2. The method according to claim 1, wherein the sending, by the terminal, the dying gasp packet to a wireless access point comprises:
sending, by the terminal, both dying gasp packets to the wireless access point by using a management frame queue and a data frame queue.

3. The method according to claim 2, wherein the dying gasp packet is a management frame packet, and the configuring, by a terminal, a dying gasp packet comprises: determining, by the terminal, a value of a preset field in the management frame packet, and determining the management frame packet as the dying gasp packet;
the method further comprises: clearing, by the terminal after detecting the power-off signal, a to-be-sent management frame packet in the management frame queue, and adding, by the terminal, the management frame packet to the cleared management frame queue; and
the sending, by the terminal, the dying gasp packet to a wireless access point comprises:
sending, by the terminal, the dying gasp packet to the wireless access point by using the management frame queue to which the management frame packet is added.

4. The method according to claim 2 or 3, wherein the dying gasp packet is a data frame packet; and the sending, by the terminal, the dying gasp packet to a wireless access point comprises:
adding, by the terminal, the data frame packet to the data frame queue, and sending the dying gasp packet to the wireless access point by using the data frame queue to which the data frame packet is added.

5. The method according to claim 4, wherein the method further comprises:
determining, by the terminal before detecting the power-off signal, priority levels corresponding to a plurality of data frame queues;
determining, by the terminal, a target data frame queue based on the priority levels; and
the adding, by the terminal, the data frame packet to the data frame queue, and sending the dying gasp packet to the wireless access point by using the data frame queue to which the data frame packet is added comprises:
adding, by the terminal, the data frame packet to the target data frame queue, and sending the dying gasp packet to the wireless access point by using the target data frame queue to which the data frame packet is added.

6. The method according to claim 1, wherein the terminal pre-configures a dedicated queue, and the sending, by the terminal, the dying gasp packet to a wireless access point comprises:
sending, by the terminal, the dying gasp packet to the wireless access point by using the dedicated queue.

7. The method according to any one of claims 1 to 6, wherein the method further comprises:
the power-off signal is generated when an input voltage corresponding to the terminal is less than a preset threshold.

8. The method according to any one of claims 1 to 7, wherein a transmission channel exists between the terminal and the wireless access point, and the method further comprises:
increasing, by the terminal, a clear channel assessment threshold corresponding to the transmission channel; and
sending, by the terminal, the dying gasp packet through the transmission channel.

9. A power-off alarm method, comprising:
receiving, by a wireless access point, a dying gasp packet sent by a terminal; and
determining, by the wireless access point, a power-off state of the terminal based on the dying gasp packet.

10. A terminal device, wherein the terminal device comprises:
a processing unit, configured to pre-configure a dying gasp packet after the terminal device is powered on, wherein the dying gasp packet is used to indicate that the terminal is in a power-off state;
a detection unit, configured to detect a power-off signal; and
a sending unit, configured to send the dying gasp packet to a wireless access point after the power-off signal is detected.

11. The terminal device according to claim 10, wherein the sending unit is specifically configured to send both dying gasp packets to the wireless access point by using a management frame queue and a data frame queue.

12. The terminal device according to claim 11, wherein the dying gasp packet comprises a management frame packet;
the processing unit is specifically configured to determine a value of a preset field in the management frame packet, and determine the management frame packet as the dying gasp packet;
the processing unit is further configured to: after the detection unit detects the power-off signal, clear a to-be-sent management frame packet in the management frame queue, and add the management frame packet to the cleared management frame queue; and
the sending unit is specifically configured to send the dying gasp packet to the wireless access point by using the management frame queue to which the management frame packet is added.

13. The terminal device according to claim 11 or 12, wherein the dying gasp packet comprises a data frame packet; and
the sending unit is specifically configured to add the data frame packet to the data frame queue, and send the dying gasp packet to the wireless access point by using the data frame queue to which the data frame packet is added.

14. The terminal device according to claim 13, wherein the terminal device further comprises a determining unit, wherein
the determining unit is configured to: before the detection unit detects the power-off signal, determine priority levels corresponding to a plurality of data frame queues; and determine a target data frame queue based on the priority levels; and
the sending unit is specifically configured to add the data frame packet to the target data frame queue, and send the dying gasp packet to the wireless access point by using the target data frame queue to which the data frame packet is added.

15. The terminal device according to claim 10, wherein the terminal device pre-configures a dedicated queue; and
the sending unit is specifically configured to send the dying gasp packet to the wireless access point by using the dedicated queue.

16. The terminal device according to any one of claims 10 to 15, wherein the power-off signal is generated when an input voltage corresponding to the terminal is less than a preset threshold.

17. The terminal device according to any one of claims 10 to 16, wherein a transmission channel exists between the terminal and the wireless access point; and
the sending unit is further configured to: increase a clear channel assessment threshold corresponding to the transmission channel, and send the dying gasp packet through the transmission channel.

18. An access point device, wherein the access point device comprises:
a receiving unit, configured to receive a dying gasp packet sent by a terminal device; and
a determining unit, configured to determine a power-off state of the terminal device based on the dying gasp packet.

19. A terminal device, comprising a processor and a memory, wherein the processor is coupled to the memory, and the memory stores program instructions; and when the program instructions stored in the memory are executed by the processor, the method according to any one of claims 1 to 8 is implemented.

20. An access point device, comprising a processor and a memory, wherein the processor is coupled to the memory, and the memory stores program instructions; and when the program instructions stored in the memory are executed by the processor, the method according to claim 9 is implemented.

21. A power-off alarm system, wherein the power-off alarm system comprises a terminal device and an access point device, wherein the terminal device performs the method according to any one of claims 1 to 8, and the access point device performs the method according to claim 9.

22. A computer-readable storage medium, comprising a program, wherein when the program runs on a computer, the computer is enabled to perform the method according to any one of claims 1 to 9.
